**Europäisches Patentamt**

**European Patent Office**

**Office européen des brevets**

(19)

(11) Veröffentlichungsnummer: **0 004 308**
**B1**

(12) **EUROPÄISCHE PATENTSCHRIFT**

(45) Veröffentlichungstag der Patentschrift:
20.01.82

(21) Anmeldenummer: 79100658.8

(22) Anmeldetag: 06.03.79

(51) Int. Cl.³: **C 08 F 255/02,** C 08 F 263/02 //
(C08F255/02, 212/04, 220/42,
220/02),(C08F263/02, 212/04,
220/42, 220/02)

(54) (Meth)acrylsäure oder (Meth)acrylsäureester enthaltende Pfropfcopolymerisate und Verfahren zu ihrer Herstellung.

(30) Priorität: 16.03.78 DE 2811549

(43) Veröffentlichungstag der Anmeldung:
03.10.79 Patentblatt 79/20

(45) Bekanntmachung des Hinweises auf die Patenterteilung:
20.01.82 Patentblatt 82/3

(84) Benannte Vertragsstaaten:
DE FR GB IT NL

(56) Entgegenhaltungen:
FR-A-2 008 144
FR-A-2 145 658
FR-A-2 179 779
FR-A-2 027 991
FR-A-2 319 651

(73) Patentinhaber: BAYER AG, Zentralbereich Patente,
Marken und Lizenzen, D-5090 Leverkusen 1, Bayerwerk
(DE)

(72) Erfinder: Steffen, Ulrich, Dr., Im Daubenthal 8,
D-4047 Dormagen (DE)
Erfinder: Alberts, Heinrich, Dr., Morgengraben 16,
D-5000 Köln 80 (DE)
Erfinder: Prinz, Richard, Dr., Bamberger Strasse 12,
D-5090 Leverkusen (DE)

## (Meth)Acrylsäure oder (Meth)Acrylsäureester enthaltende Pfropfcopolymerisate und Verfahren zu ihrer Herstellung

Die Erfindung betrifft Pfropfcopolymerisate aus Äthylencopolymerisaten als Pfropfsubstrat und einem Gemisch von (Meth)Acrylnitril, Monovinylaromaten und (Meth)Acrylsäure oder (Meth)Acrylsäureester als Pfropfmonomere sowie ein Verfahren zu ihrer Herstellung.

Die radikalische Pfropfung von Styrol-Acrylnitril-Gemischen auf Äthylencopolymerisate führt bekanntlich zu unverträglichen und inhomogenen Pfropfcopolymerisaten mit schlechten mechanischen Festigkeitswerten. In solchen Produkten besteht die Harzphase zu einem grossen Teil aus freiem Styrol-Acrylnitril-Copolymerisat (J. L. Locatelli, G. Riess, Angew. Makromolekulare Chem. 32 (1973) 117; britisches Patent 917 498).

Durch zusätzlichen Einsatz von bestimmten Comonomeren wie $\alpha$-Olefine (DOS 2 215 588), Vinylchlorid (DOS 2 509 403) und Acrylamid (deutsche Patentanmeldung P 2 656 228.7) lassen sich die Pfropfausbeuten und parallel dazu die mechanischen Eigenschaften verbessern.

Diese Monomeren haben jedoch auch einige Nachteile: Die $\alpha$-Olefine erniedrigen die Molekulargewichte der Harzphase und werden während der Polymerisation nicht immer quantitativ verbraucht. Vinylchlorid ist aufgrund seiner Toxizität nicht allgemein als Comonomeres verwendbar. Acrylamid bereitet infolge seiner Schwerlöslichkeit in unpolaren Lösungsmitteln und Monomeren mitunter Schwierigkeiten bei Massepfropfcopolymerisationen. Ausserdem kann es bei der Schneckenausdampfung der Pfropfcopolymerisate zu störenden Ablagerungen in den Kondensatoren führen.

Aus der FR-PS 2 179 779 (DOS 2 215 588) sind Pfropfpolymerisate auf der Basis von Ethylenvinylacetatcopolymeren bekannt, auf die Monomerengemische aus (Meth)Acrylnitril und einem Monovinylaromaten, sowie einem Olefin aufgepfropft sind. Zusätzlich können als aufzupfropfende Monomere Allyl- und Vinylverbindungen eingesetzt werden wie z.B. (Meth)Acrylsäure oder deren Alkylester. Um eine hohe Pfropfausbeute und ein chemisch einheitliches Produkt mit guten mechanischen Eigenschaften zu erhalten, ist gemäss FR-PS 2 179 779 die Mitverwendung des Olefins zwingend erforderlich.

Aus der FR-PS 2 008 144 sind Abmischungen eines thermoplastischen Harzes mit einem Pfropfpolymerisat bekannt, das aus einem modifizierten Ethylen-Vinylester-Copolymeren als Pfropfgrundlage und polymerisierten Einheiten von (Meth)Acrylnitril, einer aromatischen Monovinylverbindung und (Meth)Acrylsäure oder deren Estern besteht. Die Modifizierung der Pfropfgrundlage erfolgt vor der Pfropfpolymerisation durch Einführung ungesättigter Seitengruppen. Wie in der FR-PS 2 008 144 dargelegt und durch Vergleichsbeispiele gezeigt wird, ist diese Modifizierung der Pfropfgrundlage die notwendige Voraussetzung, um Produkte mit guten mechanischen Eigenschaften zu erhalten.

Es werden daher pfropfaktive, copolymerisierbare Monomere benötigt, welche mit Gemischen aus Monovinylaromaten, (Meth)Acrylnitril und Äthylen-Vinylester-Copolymerisaten als Substrat Pfropfcopolymerisate mit guten Eigenschaften ergeben, ohne die genannten Nachteile aufzuweisen. Wie nun gefunden wurde, wird dieses Ziel erreicht durch Verwendung von 0,1–15 Gew.-%, bevorzugt 0,5–12 Gew.-% an (Meth)Acrylsäure oder (Meth)Acrylsäureester, bezogen auf das aufzupfropfende Monomerengemisch.

Gegenstand der Erfindung sind somit Pfropfcopolymerisate aus einem Ethylen-Vinylester-Copolymeren als Pfropfsubstrat und aufgepfropften Monomereinheiten von (Meth)Acrylnitril und Monovinylaromaten, sowie einem weiteren copolymerisierbaren Monomeren, dadurch gekennzeichnet, dass die Monomeren zu 80 bis 100% auf das Substrat aufgepfropft sind, wobei daneben untergeordnete Mengen an ungepfropftem Substrat und ungepfropftem Copolymerisat vorliegen können, die Pfropfcopolymerisate Grenzviskositäten von 0,4 bis 2,0 dl/g besitzen und bestehen aus

A. 10–80 Gew.-% eines Ethylen-Vinylester-Copolymeren mit Mooneyviskositäten von 15–80 und Grenzviskositäten von 0,5–1,5 dl/g und 1–75 Gew.-% einpolymerisierten Vinylestern von Monocarbonsäuren mit 1–10 Atomen im Alkylrest und

B. 90–20 Gew.-% eines aufgepfropften Monomerengemisches aus

    I)  5 –50 Gew.-% Acrylnitril und/oder Methacrylnitril

    II) 94,9–35 Gew.-% eines oder mehrerer Monovinylaromaten und

    III) 0,1–15 Gew.-% (Meth)Acrylsäure oder eines (Meth)Acrylsäurealkylesters mit 1–12 C-Atomen im Alkylrest, wobei die Summe der Komponenten A und B und I–III jeweils 100 Gew.-% beträgt.

Ein weiterer Gegenstand der Erfindung ist ein Verfahren zur Herstellung der vorgenannten Pfropfcopolymerisate aus einem Ethylen-Vinylester-Copolymeren als Pfropfsubstrat und aufgepfropften Monomereinheiten von (Meth)Acrylnitril und Monovinylaromaten, sowie einem weiteren copolymerisierbaren Monomeren, dadurch gekennzeichnet, dass

20–90 Gew.-% eines Monomerengemisches aus

    I) 5–50 Gew.-% Acrylnitril und/oder Methacrylnitril

    II) 94,9–35 Gew.-% eines oder mehrerer Monovinylaromaten und

    III) 0,1–15 Gew.-% (Meth)Acrylsäure oder eines (Meth)Acrylsäurealkylesters mit 1–12 C-Atomen im Alkylrest in Gegenwart von

10–80 Gew.-% eines Ethylen-Vinylester-Copolymeren mit Mooney-Viskositäten von 15–80 und Grenzviskositäten von 0,5–1,5 dl/g und 1–75 Gew.-% einpolymerisierten Vinylestern von Monocarbonsäuren mit 1–10 C-Atomen im Alkylrest und eines Radikalbildners polymerisiert werden.

Als Pfropfsubstrate können Äthylen-Vinylester-Copolymere mit 1–75 Gew.-%, vorzugsweise 35–50 Gew.-%, einpolymerisierten Vinylestern eingesetzt werden. Als Vinylester werden Ester von Monocarbonsäuren mit 1–10 C-Atomen im Alkylrest, bevorzugt Vinylacetat verwendet.

Die Äthylen-Vinylester-Copolymeren können Mooneyviskositäten ML 4/100°C, gemessen nach DIN 53 523, von 15–80, bevorzugt 20–45 haben und Grenzviskositäten $[\eta]$ von 0,5–1,5 dl/g. Diese Copolymeren sind in Kohlenwasserstoffen und bei höheren Vinylestergehalten auch in Alkoholen löslich.

Als aufzupfropfende Monomere können (Meth)Acrylnitril, Monovinylaromaten wie Styrol, $\alpha$-Methyl-Styrol und kernsubstituierte Styrole wie Halogen- und Alkylstyrol mit 1–4 C-Atomen im Alkylrest, (Meth)Acrylsäure und (Meth)Acrylsäurealkylester mit 1–12 C-Atomen im Alkylrest.

Bevorzugt werden Acrylnitril, Styrol und (Meth)Acrylsäurealkylester mit 1–4 C-Atomen im Alkylrest eingesetzt.

Das eingesetzte Substanzgemisch besteht aus
A. 10–80 Gew.-% Äthylen-Vinylester, bevorzugt Äthylen-Vinylacetat-Copolymerisat und
B. 90–20 Gew.-% aufzupfropfendem Monomerengemisch, bestehend aus
  I 5–50 Gew.-%, vorzugsweise 5–30 Gew.-% (Meth)Acrylnitril,
  II 94,9–35 Gew.-%, vorzugsweise 94,5–58,0 Gew.-% eines oder mehrerer Monovinylaromaten und
  III 0,1–15 Gew.-%, vorzugsweise 0,5–12 Gew.-% (Meth)Acrylsäure oder eines (Meth)Acrylsäurealkylesters.

Die Summe der Komponenten I–III beträgt 100%.

Die erhaltenen Pfropfcopolymerisate bestehen aus
A. 10–80 Gew.-%, bevorzugt 15–25 Gew.-% Äthylen-Vinylester-Copolymerisat als Pfropfgrundlage und
B. 90–20 Gew.-%, bevorzugt 85–75 Gew.-% aufgepfropfter Harzphase, die durch Copolymerisation von (Meth)Acrylnitril eines oder mehrerer Monovinylaromaten und (Meth)Acrylsäure bzw. einem (Meth)Acrylsäurealkylester gebildet wird.

Das aufgepfropfte Monomerengemisch besteht aus
  I 5–50 Gew.-%, vorzugsweise 5–30 Gew.-% (Meth)Acrylnitril,
  II 35–94,9 Gew.-%, vorzugsweise 58–94,5 Gew.-% eines oder mehrerer Monovinylaromaten und
  III 0,1–15 Gew.-%, vorzugsweise 0,5–12 Gew.-% (Meth)Acrylsäure oder einem (Meth)Acrylsäurealkylester.

Die Summe der Komponenten I–III beträgt 100%.

Diese Pfropfcopolymerisate haben Grenzviskositätswerte von 0,4–2,0 bevorzugt von 0,6–1,5 dl/g, gemessen in Dimethylformamid bei 25°C.

In diesen Produkten sind die Monomeren weitgehend auf das Substrat gepfropft. Daneben können untergeordnete Mengen an ungepfropftem Copolymerisat und ungepfropftem Substrat vorliegen.

Die Pfropfreaktion kann in homogener und heterogener Phase durchgeführt werden.

Soll die Pfropfung in Lösung durchgeführt werden, so richtet sich die Art des Lösungsmittels nach dem Vinylesteranteil des Copolymerisats. Bei Vinylestergehalten < 30 Gew.-% sind die bevorzugten Lösungsmittel Aromaten wie Benzol, Toluol und Chlorbenzol. Bei höheren Vinylestergehalten werden Alkohole, bevorzugt tert.-Butanol, als Lösungsmittel verwendet.

Die Pfropfreaktion auf Äthylen-Vinylester-Copolymerisate kann auch in Masse durchgeführt werden. Bei der Massepfropfung wird am günstigsten kontinuierlich verfahren. Dabei müssen mittlere Verweilzeit im Reaktor und Temperatur mit der Zerfallkonstante und Konzentration des Initiators abgestimmt sein, um einen bestimmten Umsatz und ausreichend hohe Molekulargewichte zu erreichen. Dieses Verfahren gewährleistet eine relativ einheitliche chemische Verteilung der Monomeren in der Harzphase.

Die Pfropfcopolymerisation kann durch Bestrahlung oder radikalliefernde Initiatoren ausgelöst werden. Als Polymerisationsinitiatoren eignen sich Azoverbindungen wie Azobisisobuttersäurenitril und insbesondere Verbindungen wie Isopropylperoxydicarbonat, $\alpha$-Äthylhexylperoxydicarbonat. Cyclohexylperoxydicarbonat, tert.-Butylperpivalat, tert.-Butylperoctoat, tert.-Butylperneodecanoat, Diacetylperoxid, Lauroylperoxid, Succinylperoxid und Debenzoylperóxid.

Die Initiatorkonzentration beträgt bei der Lösungspolymerisation 0,1–1,0 Gew.-%, bevorzugt 0,3–0,5 Gew.-%, bezogen auf das eingesetzte Monomerengemisch. Die Pfropfpolymerisation wird bei Temperaturen zwischen 40 und 250°C, bevorzugt zwischen 60 und 120°C durchgeführt.

Zur Erzielung hoher Molekulargewichte und guter Pfropfausbeuten wird die Pfropfpolymerisation vorzugsweise bei relativ tiefen Temperaturen, beispielsweise bei 60–70°C gestartet und bei Temperaturen zwischen 80 und 100°C zu Ende geführt.

Zur Erzielung besonderer Effekte, z.B. Vernetzung des Äthylen-Copolymerisats, kann die Pfropfreaktion auch in wässrig heterogener Phase durchgeführt werden.

Zu diesem Zweck wird die Pfropfpolymerisation vorzugsweise so gestartet, dass eine Lösung aus Äthylen-Vinylester-Copolymerisat in einem Gemisch der oben genannten Monomeren in Gegenwart von 0,01–0,5 Gew.-% Peroxiden der oben genannten Art auf eine Reaktionstemperatur von 60–90°C erwärmt wird. Nachdem die Polymerisation so weit fortgeschritten ist, dass ein Umsatz von 20–30% erreicht ist, wird durch Hinzufügen eines Gemisches aus Wasser und einer Dispergatorlösung die Pfropfpolymerisation als Perlpolymerisation bei 80–100 °C zu Ende geführt.

Das Verhältnis der wässrigen zur organischen Phase soll dabei 2:1 bis 5:1 betragen. Als Dispergatoren seien Polyvinylalkohol, teilverseiftes Polyvinylacetat, Cellulosederivate wie Methyl- oder β-Hydroxyäthyl-Cellulose, Styrol-Acrylsäure- oder verseifte Styrol-Maleinsäureanhydrid-Copolymerisate, Methacrylsäure-Methylmethacrylat-Copolymere, Polyacrylamid oder Polyacrylsäure beispielhaft erwähnt.

Die Menge der eingesetzten Dispergatoren beträgt 0,01–3 Gew.-%, bevorzugt 0,5–2 Gew.-% bezogen auf die eingesetzte organische Phase.

Wird die Massepolymerisation bei 80–120 °C durchgeführt, dann tritt eine teilweise Vernetzung des Pfropfsubstrates ein. Dies führt zu verbesserten mechanischen Eigenschaften, z.B. höhere Schlagzähigkeit und bessere Verarbeitbarkeit. Der gleiche Effekt kann auch durch Auspolymerisation eines in Masse oder in Lösung hergestellten Pfropfcopolymerisates in einer Polymerisationsschnecke bei 120–250 °C unter Zugabe von Peroxid erreicht werden.

Bei den beschriebenen Verfahren werden die Monomeren zu 80–100% auf das Substrat aufgepfropft, während ohne (Meth)Acrylsäure oder (Meth)Acrylsäurealkylester unter den gleichen Bedingungen – je nach verwendetem Pfropfsubstrat – etwa 30 Gew.-% und mehr der eingesetzten Monomeren als freies Copolymerisat vorliegen.

Der Einsatz von (Meth)Acrylsäure oder (Meth)Acrylsäurealkylester führt zu Pfropfpolymerisaten mit gleichmässiger chemischer Verteilung. Beispielhaft sei die Fraktionierung eines Pfropfcopolymerisats (Beispiel 11) mit entmischenden Flüssigkeiten (Dimethylformamid/Methylcyclohexan) angeführt (Tab. 1).

Bei dieser Methode erfolgt eine besonders starke Trennung nach der chemischen Zusammensetzung der Polymermoleküle, also auch nach Pfropfastlänge und Pfropfsubstrat-Molekulargewicht (R. Kuhn, Makromolekulare Chem. 177 (1976) 1525). In der Methylcyclohexan-(MCH)-Phase befindet sich ungepfropftes Äthylen-Vinylacetat-Copolymer sowie ein Copolymer mit wenigen oder kurzen Pfropfästen. In der Dimethylformamid-(DMF)-Phase sind das ungepfropfte Harz und Pfropfsubstrat mit niedrigem Molekulargewicht fraktioniert.

Die Analysenwerte deuten auf unterschiedlich gepfropftes Substrat hin, was teilweise durch die breite Molekulargewichtsverteilung des Substrates bedingt ist. Anderseits sind Anteile an ungepfropftem Substrat und freier Harzphase mit Sicherheit sehr niedrig, da durch zusätzliche Fraktionierung keine weitere Auftrennung mehr möglich war. Die erfindungsgemäss erhaltenen Produkte eignen sich als Beschichtungsmaterial und thermoplastisch verarbeitbare Kunststoffe. Sie können auf den in der Thermoplast-Technologie üblichen Maschinen problemlos verarbeitet werden.

Extrudierte oder gespritzte Formstücke haben einen hohen Oberflächenglanz, wie er ohne Acrylate als Pfropfaktivatoren nicht erreicht werden kann. Ausserdem wird keine Entmischung der Elastomer- und Harzphase unter Verarbeitungsbedingungen festgestellt.

Tabelle 1
Fraktionierung mit entmischenden Flüssigkeiten (DMF/MCH)
(Beispiel 11):

| Phase | Gew.-% | N [Gew.-%] | O [Gew.-%] | Pfropfausbeute [%] |
|-------|--------|------------|------------|--------------------|
| DMF   | 44,9   | 6,7        | 2,7        |                    |
|       |        |            |            | ~ 70               |
| MCH   | 55,1   | 3,3        | 8,4        |                    |

In den folgenden Beispielen werden Ethylen-Vinylester-Copolymere mit Grenzviskositäten von 0,5 bis 1,5 dl/g verwendet.

Beispiele 1–4

In einem 40-Liter-Rührautoklav wurden 1500 g eines Äthylen-Vinylacetat-Copolymeren mit 45 Gew.-% Vinylacetat und einer Mooney-Viskosität von 20 in 15,7 kg tert.-Butanol bei 60° gelöst und mit N₂ begast. Dazu wurde eine Mischung bestehend aus 2250 g Styrol, 750 g Acrylnitril und

1. 15 g Methylacrylat
2. 77 g Methylacrylat
3. 240 g Methylacrylat
4. 410 g Methylacrylat

und 30 g tert.-Butylperpivalat bei 60 °C zugegeben und 6 h bei 60 °C polymerisiert. Danach wurde die Temperatur auf 80 °C erhöht und zwei Lösungen bestehend aus 2250 g Styrol, 750 g Acrylnitril und

1. 15 g Methylacrylat
2. 77 g Methylacrylat
3. 240 g Methylacrylat
4. 410 g Methylacrylat

sowie 40 g tert.-Butylperpivalat in 1000 ml tert-Butanol in 3 h zugepumpt. Anschliessend wurde 3 h bei 80 °C auspolymerisiert. Es wurden Feststoffgehalte zwischen 28 und 32% erreicht. Die Aufarbeitung erfolgte durch Ausfällung in heissem Wasser und Trocknen bei 60 °C. Man erhielt zwischen 7 und 8,5 kg eines weissen, pulverförmigen Pfropfcopolymerisates.

Beispiele 5–8

Es wurde wie in den Beispielen 1–4 verfahren, mit dem Unterschied, dass Äthylacrylat in entsprechenden Mengen zugegeben wurde. Die Ausbeuten betrugen ebenfalls 7–8,5 kg an pulverförmigen Pfropfcopolymerisaten.

**Beispiele 9–12**

In diesen Beispielen wurde Butylacrylat anstelle von Methylacrylat in entsprechenden Mengen zugefügt und wie in den Beispielen 1–4 gearbeitet.

In Tabelle 2 sind die Prüfergebnisse der in den Beispielen 1–12 dargestellten Pfropfcopolymerisate zusammengestellt. Die Messungen wurden nach folgenden Normen durchgeführt:

| | | |
|---|---|---|
| Schlagzähigkeit | $a_n$ | nach DIN 53 453 |
| Kerbschlagzähigkeit | $a_k$ | nach DIN 53 453 |
| Kugeldruckhärte | $H_k$ nach 30 sec. | nach DIN 53 456 |
| Biege-E-Modul | | nach DIN 53 457 |
| Vicat-Temp., Meth. B | | nach DIN 53 460 |

Tabelle 2

Mechanische Eigenschaften der in den Beispielen 1–12 dargestellten Pfropfcopolymerisate.
Der Äthylen-Vinylacetat-Gehalt beträgt in allen Proben 22,0 Gew.-%.

| Beispiel Nr. | Acrylat | [Gew.-%][1] | $[\eta]$[2] [dl/g] | $a_n$[3] [kJ/$_m$2] | $a_k$ [kJ/$_m$2] | Biege-E-Modul [N/mm²] | Vicat B [°C] | $H_k$ [N/mm²] |
|---|---|---|---|---|---|---|---|---|
| 1 | Methylacrylat | 0,5 | 0,66 | 31 | 3 | 2180 | 93 | 75 |
| 2 | Methylacrylat | 2,5 | 0,61 | 70 | 4 | 2210 | 92 | 76 |
| 3 | Methylacrylat | 7,5 | 0,73 | 33 | 3 | 2210 | 91 | 82 |
| 4 | Methylacrylat | 12,0 | 0,69 | 32 | 4 | 2360 | 92 | 86 |
| 5 | Äthylacrylat | 0,5 | 0,68 | 33 | 4 | 2330 | 96 | 84 |
| 6 | Äthylacrylat | 2,5 | 0,68 | 28 | 3 | 2340 | 94 | 85 |
| 7 | Äthylacrylat | 7,5 | 0,70 | 29 | 3 | 2320 | 91 | 84 |
| 8 | Äthylacrylat | 12,0 | 0,64 | 28 | 3 | 2330 | 90 | 84 |
| 9 | n-Butylacrylat | 0,5 | 0,78 | 45 | 4 | 2990 | 95 | 79 |
| 10 | n-Butylacrylat | 2,5 | 0,40 | 48 | 3 | 2330 | 95 | 83 |
| 11 | n-Butylacrylat | 7,5 | 0,72 | 33 | 3 | 2390 | 92 | 87 |
| 12 | n-Butylacrylat | 12,0 | 0,56 | 27 | 3 | 2320 | 89 | 84 |

[1] Bezogen auf eingesetzte Monomere
[2] $[\eta]$: Grenzviskosität, gemessen in DMF bei 25 °C

**Patentansprüche**

1. Pfropfcopolymerisate aus einem Ethylen-Vinylester-Copolymeren als Pfropfsubstrat und aufgepfropften Monomereinheiten von (Meth)Acrylnitril und Monovinylaromaten, sowie einem weiteren copolymerisierbaren Monomeren dadurch gekennzeichnet, dass die Monomeren zu 80–100% auf das Substrat aufgepfropft sind, wobei daneben untergeordnete Mengen an ungepfropftem Substrat und ungepfropftem Copolymerisat vorliegen können, die Pfropfcopolymerisate Grenzviskositäten von 0,4 bis 2,0 dl/g besitzen und bestehen aus

A. 10–80 Gew.-% eines Ethylen-Vinyl-Copolymeren mit Mooneyviskositäten von 15–80 und Grenzviskositäten von 0,5 bis 1,5 dl/g und 1–75 Gew.-% einpolymerisierten Vinylestern von Monocarbonsäuren mit 1–10 Atomen im Alkylrest und

B. 90–20 Gew.-% eines aufgepfropften Monomerengemisches aus
  I 5–50 Gew.-% Acrylnitril und/oder Methacrylnitril
  II 94,9–35 Gew.-% eines oder mehrerer Monovinylaromaten und

  III 0,1–15 Gew.-% (Meth)Acrylsäure oder eines (Meth)Acrylsäurealkylesters mit 1–12 C-Atomen im Alkylrest, wobei die Summe der Komponenten A und B und I–III jeweils 100 Gew.-% beträgt.

2. Pfropfpolymerisate nach Anspruch 1, bestehend aus
A. 15–25 Gew.-% eines Äthylen-Vinylester-Copolymeren mit einem Vinylester-Gehalt von 35–50 Gew.-% und
B. 85–75 Gew.-% eines aufgepfropften Monomerengemisches aus
  I 5 –30 Gew.-% Acrylnitril und/oder Methacrylnitril,
  II 94,5–58 Gew.-% eines oder mehrerer Monovinylaromaten und
  III 0,5–12 Gew.-% (Meth)Acrylsäure oder eines (Meth)Acrylsäurealkylesters, wobei die Summe der Komponenten A und B und I–III jeweils 100 Gew.-% beträgt.

3. Pfropfpolymerisate nach Anspruch 2, dadurch gekennzeichnet, dass sie als Vinylester Vinylacetat und als aufgepfropfte Monomere Acrylnitril, Styrol und (Meth)Acrylsäurealkylester mit 1 bis 12 C-Atomen enthalten.

4. Pfropfpolymerisate nach Anspruch 3, dadurch gekennzeichnet, dass (Meth)Acrylsäurealkylester mit 1 bis 4 C-Atomen im Alkylrest eingesetzt werden.

5. Verfahren zur Herstellung von Pfropfpolymerisaten nach Anspruch 1 aus einem Ethylen-Vinylester-Copolymeren als Pfropfsubstrat und aufgepfropften Monomereinheiten von (Meth)Acrylnitril und Monovinylaromaten, sowie einem weiteren copolymerisierbaren Monomeren, dadurch gekennzeichnet, dass
20–90 Gew.-% eines Monomerengemisches aus
I 5–50 Gew.-% Acrylnitril und/oder Methacrylnitril
II 94,9–35 Gew.-% eines oder mehrerer Monovinylaromaten und
III 0,1–15 Gew.-% (Meth)Acrylsäure oder eines (Meth)Acrylsäurealkylesters mit 1–12 C-Atomen im Alkylrest in Gegenwart von
10–80 Gew.-% eines Ethylen-Vinylester-Copolymeren mit Mooney-Viskositäten von 15–80 und Grenzviskositäten von 0,5 bis 1,5 dl/g und 1–75 Gew.-% einpolymerisierten Vinylestern und Monocarbonsäuren mit 1–10 C-Atomen im Alkylrest und eines Radikalbildners polymerisiert werden.

## Claims

1. Graft copolymers consisting of an ethylene/vinyl ester copolymer as the graft base and grafted-on monomer units of (meth)acrylonitrile and aromatic monovinyl compounds, as well as a further copolymerisable monomer, characterised in that 80 to 100% of the monomers are grafted on to the base, it being possible for small quantities of ungrafted base and ungrafted copolymer to additionally be present, the graft copolymers have intrinsic viscosities of 0,4 to 2,0 dl/g and consist of
A. 10–80% by weight of an ethylene/vinyl ester copolymer having Mooney viscosities of 15–80 and intrinsic viscosities of 0,5 to 1,5 dl/g and 1–75% by weight of copolymerised vinyl esters of monocarboxylic acids containing 1–10 atoms in the alkyl radical and
B. 90–20% by weight of a grafted-on monomer mixture of
   I) 5–50% by weight of acrylonitrile and/or methacrylonitrile
   II) 94,9–35% by weight of one or more aromatic monovinyl compounds and
   III) 0,1–15% by weight of (meth)acrylic acid or a (meth)acrylic acid alkyl ester containing 1–12 C-atoms in the alkyl radical,
the sum of components A and B, and I–III in each case being 100%.
2. Graft polymers according to Claim 1, consisting of
A. 15–25% by weight of an ethylene/vinyl ester copolymer containing 35–50% by weight of vinyl ester and
B. 85–75% by weight of a grafted-on monomer mixture of
   I) 5–30% by weight of acrylonitrile and/or methacrylonitrile,

II) 94,5–58% by weight of one or more aromatic monovinyl compounds and
III) 0,5–12% by weight of (meth)acrylic acid or a (meth)acrylic acid alkyl ester, the sum of the components A and B, and I–III in each case being 100% by weight.

3. Graft polymers according to Claim 2, characterised in that the vinyl ester which they contain is vinyl acetate and the grafted-on monomer which they contain is acrylonitrile, styrene and (meth)acrylic acid alkyl ester with 1 to 12 C-atoms.

4. Graft polymers according to Claim 3, characterised in that (meth)acrylic acid alkyl esters with 1 to 4 C-atoms in the radical are used.

5. Process for the production of graft polymers according to Claim 1 from an ethylene/vinyl ester copolymer as the graft base and grafted-on monomer units of (meth)acrylonitrile and aromatic monovinyl compounds, as well as a further copolymerisable monomer, characterised in that
20–90% by weight of a monomer mixture of
   I) 5–50% by weight of acrylonitrile and/or methacrylonitrile
   II) 94,9–35% by weight of one or more aromatic monovynyl compounds and
   III) 0,1–15% by weight of (meth)acrylic acid or a (meth)acrylic acid alkyl ester containing 1–12 C-atoms in the alkyl radical are polymerised in the presence of 10–80% by weight of an ethylene/vinyl ester copolymer having Mooney viscosities of 15–80 and intrinsic viscosities of 0,5 to 1,5 dl/g and 1–75% by weiht of copolymerised vinyl esters and monocarboxylic acids containing 1–10 C-atoms in the alkyl radical, and a radical-former.

## Revendications

1. Copolimérisats greffés d'un copolymère éthylène-ester vinylique comme substrat de greffage et de motifs monomériques greffés de (méth)acrylonitrile et de composés aromatiques monovinyliques, ainsi que d'un autre monomère copolymérisable, caractérisé en ce que les monomères sont greffés en proportion de 80 à 100% sur le substrat, de faibles quantités de substrat non greffé et de copolymérisat non greffé pouvant en outre être présentes, les copolymérisats greffés possèdent des viscosités intrinsèques de 0,4 à 2,0 dl/g et sont formés de:
A. 10 à 80% en poids d'un copolymère éthylène-ester de vinyle ayant des viscosités Mooney de 15–80 et des viscosités intrinsèques de 0,5 à 1,5 dl/g et 1–75% en poids d'esters vinyliques, incorporés par polymérisation, d'acides monocarboxyliques ayant 1 à 10 atomes de carbone dans le reste alkyle et
B. 90–20% en poids d'un mélange monomérique greffé de
   I) 5 à 50% en poids d'acrylonitrile et/ou de méthacrylonitrile
   II) 94,9–35% en poids d'un ou plusieurs composés aromatiques monovinyliques et
   III) 0,1–15% en poids d'acide (méth)acrylique ou d'un ester alkylique d'acide (méth)acrylique ayant 1 à 12 atomes de carbone dans le reste alkyle, la somme des composants A et B et I–III s'élévant toujours à 100% en poids.

2. Polymérisats greffés suivant la revendication 1, formés de:

A. 15–25% en poids d'un copolymère éthylène-ester de vinyle ayant une teneur en ester de vinyle de 35–50% et

B. 85–75% en poids d'un mélange monomérique greffé de:
    I) 5–30% en poids d'acrylonitrile et/ou de méthacrylonitrile,
    II) 94,5–58% en poids d'un ou plusieurs composés aromatiques monovinyliques et
    III) 0,5–12% en poids d'acide (méth)acrylique ou d'un ester alkylique d'acide (méth)acrylique, la somme des composants A et B et I–III s'élévant toujours à 100% en poids.

3. Polymérisats greffés suivant la revendication 2, caractérisé en ce qu'ils contiennent comme ester vinylique de l'acétate de vinyle et, comme monomères greffés, de l'acrylonitrile, du styrène et un ester alkylique d'acide (méth)acrylique ayant 1 à 12 atomes de carbone.

4. Polymérisats greffés suivant la revendication 3, caractérisés en ce que des esters alkyliques d'acide (méth)acryliques ayant 1 à 4 atomes de carbone dans le reste alkyle sont utilisés.

5. Procédé de production de polymérisats greffés suivant la revendication 1 à partir d'un copolymère d'éthylène et d'ester vinylique comme substrat de greffage et de motifs monomériques greffés de (méth)acrylonitrile et de composés aromatiques monovinyliques ainsi que d'un autre monomère copolymérisable, caractérisé en ce que: 20 à 90% en poids d'un mélange de monomères composé de:
    I) 5 à 50% en poids d'acrylonitrile et/ou de méthacrylonitrile
    II) 94,9–35% en poids d'un ou plusieurs composés aromatiques monovinyliques et
    III) 0,1–15% en poids d'acide (méth)acrylique ou d'un ester alkylique d'acide (méth)acrylique ayant 1–12 atomes de carbone dans le reste alkyle sont polymérisés en présence de 10–80% en poids d'un copolymère éthylène-ester de vinyle ayant des viscosités Mooney de 15–80 et des viscosités intrinsèques de 0,5 à 1,5 dl/g et de 1–75% en poids d'esters vinyliques incorporés par polymérisation et d'acides monocarboxyliques avec 1–10 atomes de carbone dans le reste alkyle et d'un générateur de radicaux.